# EUROPEAN PATENT APPLICATION

(11) **EP 2 775 441 A2**
(43) Date of publication of application: **10.09.2014**
(21) Application number: 14159255.0
(22) Date of filing: 29.08.2007
(51) Int. Cl.: G06Q 30/00

(54) **Payment systems and methods**

(30) Priority: 05.09.2006 US 842102 P; 17.04.2007 US 925054 P; 30.04.2007 US 926893 P
(62) Divisional of application: 07837611.8
(71) Applicant: Quisk, Inc., Sunnyvale, CA 94089 (US)
(72) Inventor: Fernandes, Jorge, Los Altos, CA 94024 (US); Wyatt, Timothy, San Francisco, CA 94117 (US); Shita, Mounir, Hillsboro, OR 97124 (US); Markwell, Scott, Woburn, MA 01801 (US); Kulasooriya, Pasan Manisha, Sunnyvale, CA 94087 (US); Wu, Kevin, Mountain View, CA 94043 (US); O'Connor, James, San Francisco, CA 94110 (US)
(74) Representative: Carpintero Lopez, Francisco

(57) **Abstract**

In one embodiment the present invention includes a payment system for a commercial transaction. The payment system includes an account server that a consumer accesses using the consumer's mobile telephone number. The account server updates the consumer's account and the merchant's account according to the transaction. The account server sends a confirmation directly to the consumer's mobile telephone.

## Description

### CROSS REFERENCE TO RELATED APPLICATIONS

The present application claims priority to U.S. Provisional Application No. 60/842,102 filed September 5, 2006 titled "Cardless, Cashless, Wireless Electronic Payment System", U.S Provisional Application No. 60/925,054 filed April 17, 2007 titled "Payment Systems and Methods", and U.S. Provisional Application No. 60/926,893 filed April 30, 2007 titled "Payment Systems and Methods". It is a divisional application of European Patent Application EP2074577 filed on August 29, 2007 titled "Payment Systems and Methods".

### BACKGROUND

The present invention relates to payment systems, and in particular, to payment systems that interact with mobile telephones.

Unless otherwise indicated herein, the approaches described in this section are not prior art to the claims in this application and are not admitted to be prior art by inclusion in this section.

A wide variety of payment methods exist for the casual purchase of goods and services by consumers. Four important methods are checks, cash, credit cards and debit cards. However, each of these three methods has drawbacks that make them undesirable in certain circumstances, from both a consumer perspective and a merchant perspective.

Regarding the disadvantages of checks, from a consumer perspective, the consumer must possess the checkbook at the time of purchase, and may have to manually track the account balance. From a merchant perspective, checks are susceptible to fraud.

Regarding the disadvantages of cash, from a consumer perspective, often the consumer does not possess the requisite amount of cash at the time the consumer would like to make a purchase. From a merchant perspective, cash is a temptation for theft. In addition, some merchants believe that consumers spend more when not using cash.

Regarding the disadvantages of credit cards, often there are charges associated with a credit card. The consumer may see these charges as interest on outstanding balances, yearly fees, etc. The merchant may see these charges as an amount or percentage paid to the credit card service company for transactions. Many credit cards require the consumer to present the card when used, so the consumer must carry the card. The consumer may lose the credit card, and the lost card may be found and used by others until the credit account is canceled. Many credit cards have magnetic strips that can become de magnetized, or the card may be otherwise damaged, rendering the card non operational even when in the consumer's possession.

Regarding the disadvantages of debit cards, from a consumer perspective, some debit cards are applicable only to a particular merchant, and the consumer must remember to possess and to use the appropriate card at the appropriate time. From a merchant perspective, debit cards have associated charges similar to those of credit cards. Many debit cards require the consumer to present the card when used, so the consumer must carry the card. Many debit cards have magnetic strips that can become de magnetized, or the card may be otherwise damaged, rendering the card non operational even when in the consumer's possession. Finally, many consumers are reluctant to give direct access to their bank accounts by using a debit card.

There is a need for a payment system as easy to use as cash but more secure, and with lower transaction costs than credit cards and debit cards. In addition, there is a need to transfer money between individuals without the proximity requirement of cash, without the transaction costs of credit or debit cards, and without the delay of sending a check.

Thus, there is a need for improved payment systems and methods. The present invention solves these and other problems by providing a payment system that uses a well known number and a verification code to access a consumer's account.

### SUMMARY

Embodiments of the present invention improve payment systems and methods. In one embodiment the present invention includes a method of performing a commercial transaction. An account server receives an account number and a verification code from a consumer. The account number and verification code are selected by the consumer. The account number relates to the consumer's account maintained by the account server. The account server verifies the account number and the verification code. The account server receives from a merchant information regarding a specific transaction with the consumer. The account server adjusts the consumer's account and the merchant's account according to the specific transaction.

According to a further embodiment, the consumer's account number is the consumer's mobile telephone number.

According to another embodiment, the account server sends a verification of the specific transaction to the consumer's mobile telephone, directly using the consumer's account number.

The following detailed description and accompanying drawings provide a better understanding of the nature and advantages of the present invention.

### BRIEF DESCRIPTION OF THE DRAWINGS

FIG. 1 is a block diagram of a payment system 100 according to an embodiment of the present invention.
FIG. 2 is a block diagram of a basic payment system 200 according to an embodiment of the present invention.
FIG. 3 is a flowchart of a transaction process 300 according to an embodiment of the present invention.
FIG. 4 is a block diagram of a standalone point of sale (POS) system 400 according to an embodiment of the present invention.
FIG. 5 is a block diagram of an integrated point of sale (POS) system 500 according to an embodiment of the present invention.
FIG. 6 is a flowchart of an account creation method 600 according to an embodiment of the present invention.
FIG. 7 is a flowchart of a data formatting process according to an embodiment of the present invention.
FIG. 8 is a block diagram of a web merchant interface system according to an embodiment of the present invention.
FIG. 9 is a flowchart of a gift certificate purchase process 900 according to an embodiment of the present invention.

### DETAILED DESCRIPTION

Described herein are techniques for performing payment transactions. In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include modifications and equivalents of the features and concepts described herein.

Various methods and procedures are described below. The method steps are shown in a specific order for ease of description. Note that not all steps are required in every embodiment, that the order of the method steps may be varied, and that many method steps may be performed in parallel, as desired in various implementations. A method step is not required to follow another step except when completion of the first step is absolutely required to perform the second step. Such cases will be evident from the context of the description or will be pointed out explicitly.

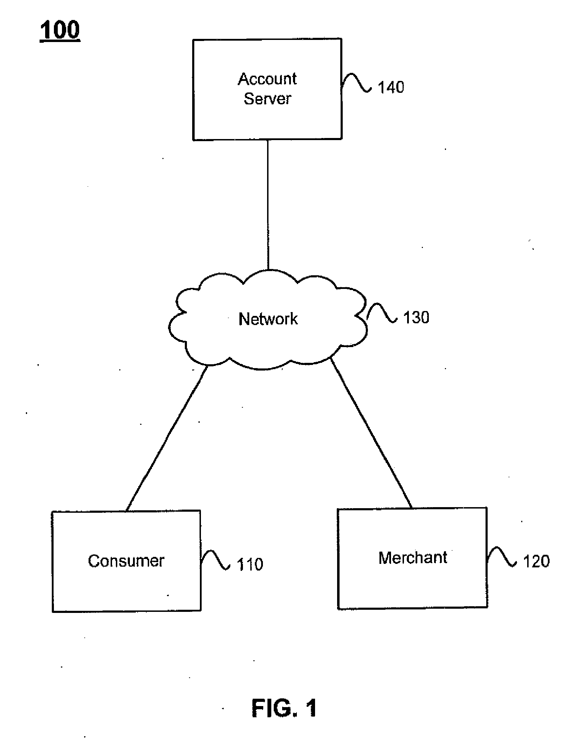

FIG. 1 is a block diagram of a payment system 100 according to an embodiment of the present invention. The payment system 100 includes a consumer interface 110, a merchant interface 120, and an account server 140. A network 130 connects the consumer interface 110 and the merchant interface 120 with the account server 140. A consumer accesses the payment system 100 via the consumer interface 110. A merchant accesses the payment system 100 via the merchant interface 110.

The consumer may generally be a person or other entity that desires to enter into a commercial transaction with the merchant. The merchant may be an individual, a business or other entity that desires to enter into a commercial transaction with the consumer. Often the consumer and the merchant will be in close proximity at the time of the commercial transaction, for example, when the consumer is purchasing an item sold (or service performed) by the merchant at a store location that hosts the consumer interface 110 and the merchant interface 120.

The network 130 may be an internet protocol (IP) network, a dedicated network, a dialup connection, etc. depending upon the specific implementation desired for the payment system 100. The consumer may interact with the account server 140 at the location of the merchant (for example, at a store), in which case the consumer interface 110 and the merchant interface 120 may access the network 130 using the same physical connection.

The account server 140 stores account data related to the consumer and the merchant. In brief, the account data indicates whether a particular transaction is authorized from the consumer to the merchant. The account server 140 then communicates the authorization to the merchant interface 120, communicates a confirmation to the consumer, and updates the account data of the consumer and of the merchant to reflect the transaction. This process is more fully described in subsequent sections.

One feature of the payment system 100, according to one embodiment, is that the consumer uses the consumer's mobile telephone number as an account number to access the payment system 100. Such access may be additionally secured with a verification code or personal identification number (PIN) code.

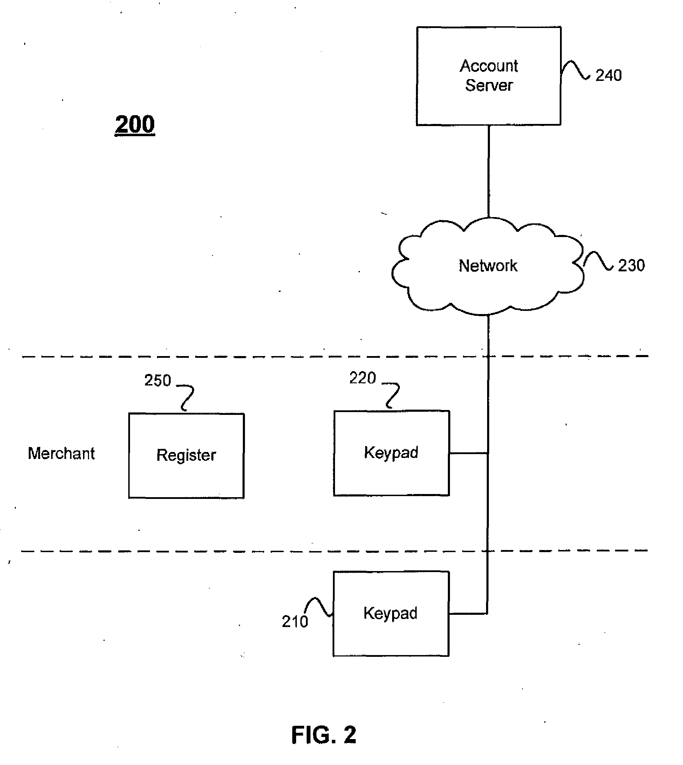

FIG. 2 is a block diagram of a basic system 200 according to an embodiment of the present invention. The basic system 200 includes a consumer keypad 210, a merchant keypad 220, and an account server 240. A network 230 connects the consumer keypad 210 and the merchant keypad 220 with the account server 240. The merchant may use a register 250 to perform the traditional functions of a cash register. Additional devices may be present, either separate or integrated with the register 250, such as credit and debit card processing devices, etc.

The consumer keypad 210 may include keys and a display. The merchant keypad 220 may include keys, a display, and a printer. Further options regarding the consumer keypad 210 and the merchant keypad 220 are discussed below.

The network 230 may be an internet protocol (IP) network, a dedicated network, a dialup connection, etc. depending upon the specific implementation desired for the payment system 200. The consumer may interact with the account server 240 at the location of the merchant (for example, at a store), in which case the consumer keypad 210 and the merchant keypad 220 may access the network 230 using the same physical connection.

According to one embodiment, the network 230 may be an existing network for transmitting commercial transaction information, for example, credit and debit card transaction information. In such embodiment, the consumer keypad 210 and the merchant keypad 220 may communicate with the account server 240 with information formatted in ISO 8583 format.

The account server 240 may be implemented on a computer system. The computer system includes hardware and software for storing the account data and updating the account data in accordance with authorized transactions.

The consumer uses the consumer keypad 210 to enter and confirm the consumer's account number and verification code. The merchant uses the merchant keypad 220 to enter and confirm the transaction amount. The account server 240 authorizes the transaction and manages account balances of the consumer and the merchant.

For simplicity, only one set of keypads are shown in FIG. 2. Additional sets of keypads may be implemented in the basic system 200, each having similar functionality. For example, an additional set of keypads may exist at a second merchant location. As another example, an additional set of keypads may exist at a single merchant location, each set being associated with its own cashier station or register.

The physical connection between the consumer keypad 210, the merchant keypad 220 and the network 230 may be modified as desired. According to one embodiment, the consumer keypad 210 and the merchant keypad 220 each connect to the network 230 independently. According to another embodiment, the consumer keypad 210 is connected to the merchant keypad 220, and the merchant keypad 220 connects to the network 230. According to still another embodiment, the merchant keypad 220 is connected to the consumer keypad 210, and the consumer keypad 210 connects to the network 230.

The basic system 200 is so named because it may be easily deployed alongside existing transaction systems, such as a traditional cash register.

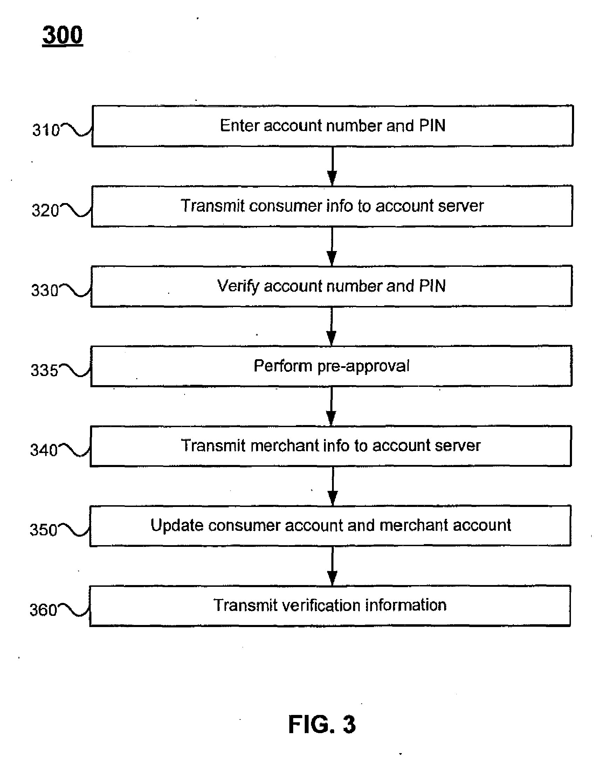

FIG. 3 is a flowchart of a transaction process 300 according to an embodiment of the present invention. The transaction process 300 will be described with reference to the basic system 200 (see FIG. 2). However, many of the steps in the transaction process 300 are also applicable to other embodiments of the present invention.

In step 310, the consumer interacts with the consumer keypad 210 to perform the consumer's part of the transaction. Generally, this involves the consumer entering the consumer's information into the consumer keypad 210. The consumer's information includes the consumer's account number and the consumer's verification code. The consumer's account number may be the telephone number of the consumer's mobile telephone. The verification code may be a personal identification number (PIN).

In step 320, the consumer keypad 210 transmits the account number and the verification code to the account server 240 via the network 230. According to one embodiment, the account number and the verification code may be encapsulated in an ISO 8583 message format for transmission over existing transaction networks. The consumer keypad 210 may also transmit additional information to the account server 240. Such additional information may include source identification information that identifies the consumer keypad 210 among the various consumer keypads (not shown in FIG. 2) that may also access the account server 240. The account server 240 may also use the source identification information to access other information the account server 240 may have regarding the consumer keypad 210, for example, that the consumer keypad 210 is associated with a type of merchant (e.g., a McDonald's restaurant), with a specific merchant (e.g., the McDonald's restaurant at a specific location), or with a specific merchant keypad (e.g., register #1 at the McDonald's restaurant a specific location), etc.

In step 330, the account server 240 receives the account number and the verification code (and any additional information). The account server 240 accesses the consumer's account and verifies that the verification code is correct.

In step 335, as an optional step, the account server 240 performs pre-approval of the transaction. After the account server has performed step 330, the account server 240 sends pre approval information to the merchant keypad 220. The pre approval information may include a verification that the account exists, the account balance, etc.

In step 340, the merchant interacts with the merchant keypad 220 to perform the merchant's part of the transaction. Generally, the merchant enters the purchase price of the transaction into the merchant keypad 220. The merchant keypad 220 transmits the purchase price to the account server 240.

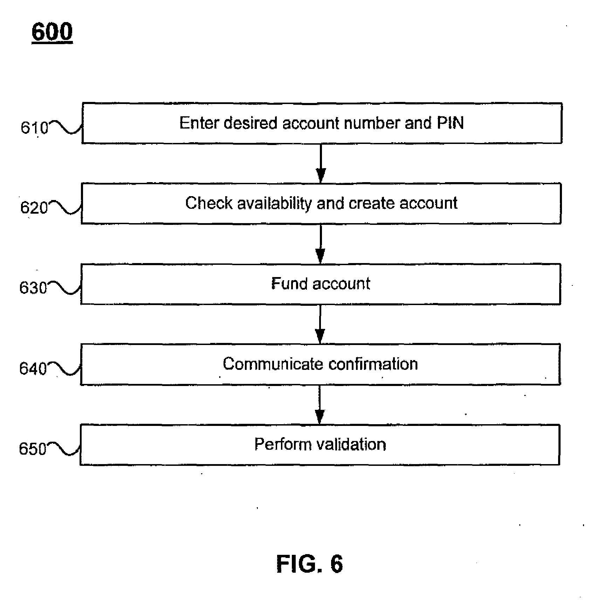

If the optional pre approval step 335 is performed, then the merchant keypad 220 may perform additional functions in step 340. If the pre approval information indicates that the account does not exist, the merchant may prompt the consumer to create an account (further described below with reference to FIG. 6). If the pre approval information indicates that the consumer's balance is more than the purchase price, the merchant may indicate to the consumer that the transaction has been approved immediately upon entry of the purchase price. The consumer may then proceed without having to wait for the merchant keypad 220 to transmit the purchase price to the account server 240 (part of step 340), for the account server 240 to update the accounts (step 350), or for the account server to communicate the verification information (step 360). This pre approval step may be contrasted with many existing payment systems, which only indicate approval after the merchant has transmitted the merchant's information. In such existing systems, the consumer must often wait in the vicinity of the merchant until the merchant has received confirmation that the transaction has been approved.

In step 350, the account server 240 updates the accounts of the merchant and the consumer. The account server 240 indicates in the consumer's account a debit (to the merchant), and in the merchant's account a credit (from the consumer).

In step 360, the account server 240 communicates verification information indicating completion of the transaction. The verification information may include the details of the transaction, such as the date, time, amount, location, etc. The verification information may be transmitted to the merchant keypad 220, to the consumer keypad 210, or to other devices. The merchant keypad 220 may use the verification information to display a message that the transaction has been completed, to print a receipt, etc. The consumer keypad 210 may use the verification information to display a message that the transaction has been completed, to print a receipt, etc.

The verification information may also be transmitted to a mobile telephone. According to one embodiment, the consumer's account number is the consumer's mobile telephone number. In such a case, the account server 240 directly uses the consumer's account number to send the verification information to the consumer's mobile telephone. Such direct access may be contrasted with a system in which the account number differs from the telephone number, which may involve an intermediate database lookup step to get the telephone number for a given account number.

Because the consumer's mobile telephone will often be in close proximity to the consumer, sending the verification information to the mobile telephone helps to reduce fraud.

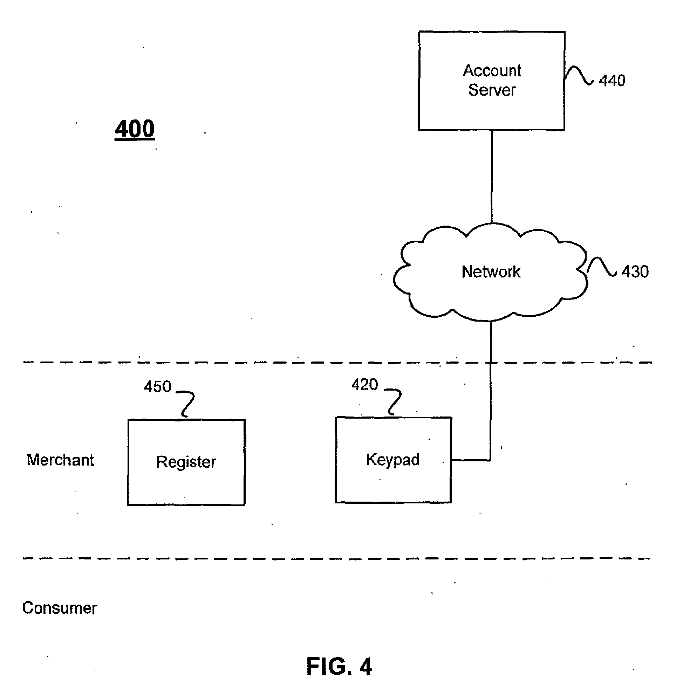

FIG. 4 is a block diagram of a standalone point of sale (POS) system 400 according to an embodiment of the present invention. The standalone POS system 400 is so named because it incorporates the functionality of the consumer keypad 210 and merchant keypad 220 (see FIG. 2) into an existing device with additional software. The standalone POS system 400 includes a merchant keypad 420 and an account server 440. The merchant keypad 420 connects to the account server 440 via a network 430. The merchant may use a register 450 to perform the traditional functions of a cash register. Additional devices may be present, either separate or integrated with the register 450, such as credit and debit card processing devices, etc.

The consumer and the merchant use the merchant keypad 420 to enter the consumer's information and the merchant's information into the payment system 400. This process is similar to that described above with reference to FIGS. 2 3. However, instead of a dedicated device like the consumer keypad 210 (see FIG. 2), the keypad 420 also performs other payment processing functions. For example, the keypad 420 may be a device that performs existing payment processing functions (for example, credit card processing, debit card processing, etc.), with the addition of software functionality that enables the keypad 420 to interface with the payment system 400.

According to one embodiment, the merchant keypad 420 may include a payment device like a VX-510 device from VeriFone Corp., with the addition of software to enable it to interact with the account server 440. Further data entry options for the keypad 420 are discussed below.

The network 430 and the account server 440 may be similar to the network 230 and the account server 240 described above.

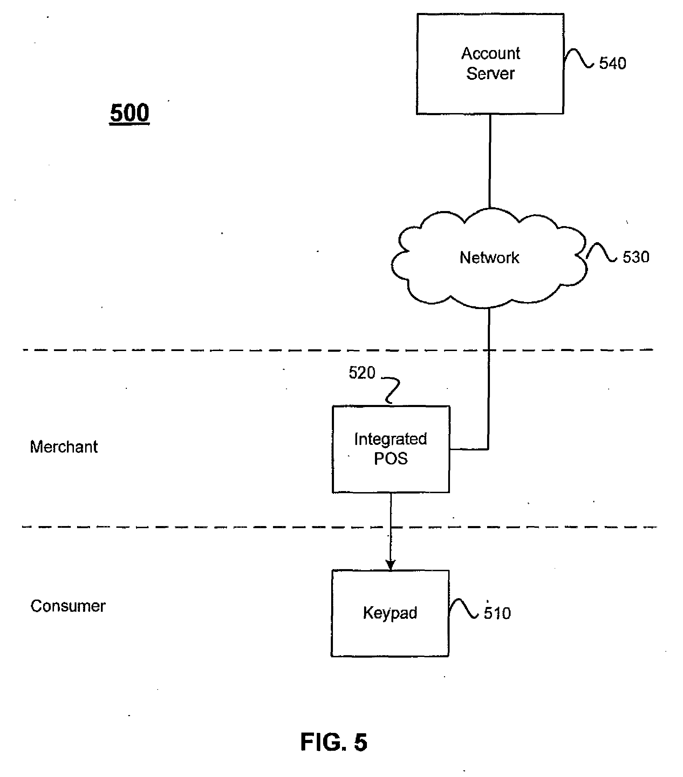

FIG. 5 is a block diagram of an integrated point of sale (POS) system 500 according to an embodiment of the present invention. The integrated POS system 500 is so named because it integrates the functions of a register and a payment system for the merchant. The integrated POS system 500 includes a consumer keypad 510, an integrated register 520, and an account server 540. A network 530 connects the consumer keypad 510 and the integrated register 520 with the account server 540.

The consumer uses the keypad 510 to enter the user's information into the payment system 500. This process is similar to that described above with reference to FIGS. 2 3. The keypad 510 may be implemented in various options and combinations. One option for the keypad 510 is a standalone keypad similar to the keypad 210 (see FIG. 2). Other options for the keypad are discussed below.

Another option for the keypad 510 is to add software to an existing keypad. For example, an existing keypad, such as a debit card processing device or credit card processing device, already performs existing payment transactions. The additional software expands the capabilities of the existing keypad so that it may also connect to the account server 540 in addition to its existing payment transaction functions.

The integrated register 520 includes the traditional functions of a register (pricing, credit and debit card interaction, inventory management, etc.) as well as the functionality to interact with the account server 540. According to one embodiment, the functionality of the merchant keypad 220 (see FIG. 2) is incorporated into the register 520 via software.

The network 530 and the account server 540 are similar to the network 230 and account server 240 described above.

FIG. 6 is a flowchart of an account creation method 600 according to an embodiment of the present invention. The account creation method 600 may occur prior to step 310 (see FIG. 3). For conciseness, the account creation method 600 is described with reference to the basic system 200; however, similar procedures may be used in other embodiments.

In step 610, the consumer enters the consumer's desired account number and desired verification code into the consumer keypad 210. Optionally the consumer may confirm the information entered. The consumer keypad 210 transmits the desired account number and desired verification code to the account server 240 via the network 230.

In step 620, the account server 240 checks that the account number is available and if so, creates an account for the consumer. The account server 240 may transmit confirmation of the account creation to the consumer keypad 210. The account server 240 may also transmit the confirmation to the merchant keypad 220.

In step 630, the consumer funds the consumer's account. According to one embodiment, funding is accomplished by the consumer giving a funding source to the merchant, the merchant entering funding information into the merchant keypad 220, the merchant keypad 220 transmitting the funding information to the account server 240, and the account server 240 updating the consumer's account (and the merchant's account) with the funding information. Various funding sources may be used, including cash, a credit card, a debit card, a gift card, a gift certificate, electronic cash, a PayPal account, a Google Checkout account, etc.

In step 640, the account server 240 communicates confirmation that the consumer's account has been funded. The confirmation may include details of the transaction, such as the date, time, amount, location, etc. The confirmation may be transmitted to the merchant keypad 220, to the consumer keypad 210, or to other devices. The merchant keypad 220 may use the confirmation information to display a message that the transaction has been completed, to print a receipt, etc. The consumer keypad 210 may use the verification information to display a message that the funding has been completed, to display the balance funded, to print a receipt, etc.

The confirmation may also be transmitted to a mobile telephone. According to one embodiment, the consumer's account number is the consumer's mobile telephone number. In such a case, the account server 240 directly uses the consumer's account number to send the confirmation to the consumer's mobile telephone. Such direct access may be contrasted with a system in which the account number differs from the telephone number, which may involve an intermediate database lookup step to get the telephone number for a given account number.

In step 650, the account server 240 performs validation of the consumer's account. Validation of a new account is optional. However, validation may be used in order to provide a higher level of security or to access additional features. Validation involves checking various information beyond the information provided in step 610. The consumer may be asked to provide a name, address, etc. The consumer's name may be checked to see that it matches the consumer's phone number. If the account is funded with a credit card, the credit card information may be validated. The consumer may provide the information for validation in a variety of ways, including via a website, via SMS messaging, via mail, via electronic mail, via telephone conversation, or in person, etc.

The validation procedure may include a grace period. For example, when an account is first created and funded, those funds may be available for use with that specific merchant or at that specific merchant location.

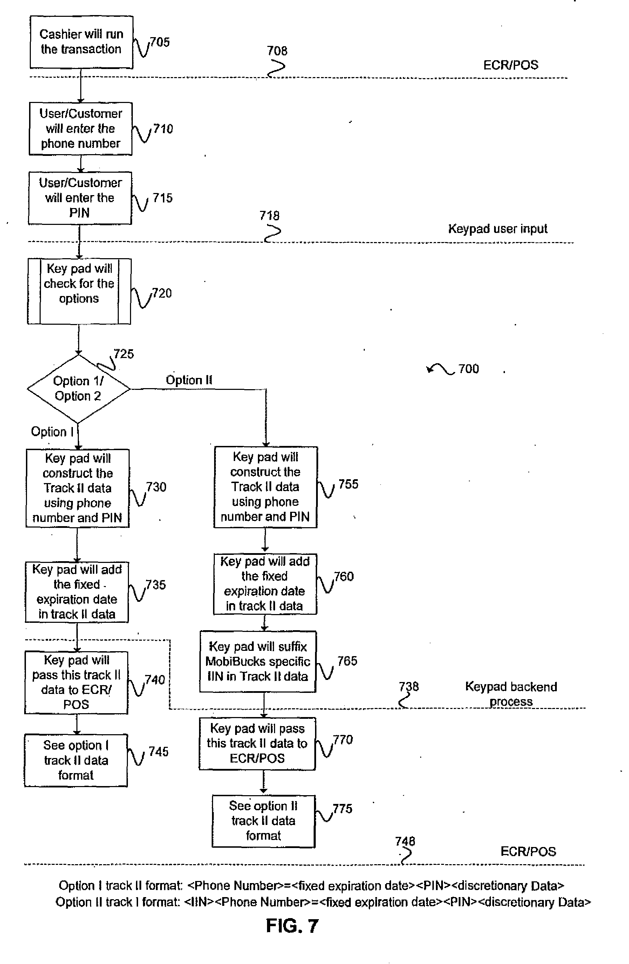

FIG. 7 is a flowchart of a data formatting process 700 according to an embodiment of the present invention. According to one embodiment, the consumer keypad 210 and the account server 240 communicate information in ISO 8583 format.

In step 705, the cashier runs the transaction. The line 708 indicates that the casher may perform this step using an electronic cash register (ECR) or other point of sale (POS) terminal. According to the embodiment of the basic system 200 (see FIG. 2), the ECR/POS may be the merchant keypad 220. According to the embodiment of the integrated POS system 500 (see FIG. 5), the ECR/POS may be the integrated POS 520.

In step 710, the user or customer enters their account number. According to some embodiments, their account number is their phone number.

In step 715, the user or customer enters their PIN. The line 718 indicates that the user may perform steps 710 and 715 using a keypad for user input, for example, the consumer keypad 210.

In step 720, the keypad checks whether an option is set for the ISO 8583 data format. According to the embodiment of the basic system 200 (see FIG. 2), the consumer keypad 210 may perform this step.

In step 725, the keypad proceeds under either option 1 or option 2 depending upon the information obtained in step 720. For option 1, the keypad proceeds to step 730. For option 2, the keypad proceeds to step 755.

In step 730, the keypad constructs Track II data using the consumer's account number (which may be the consumer's phone number) and PIN.

In step 735, the keypad adds a fixed expiration date to the Track II data. The line 738 indicates that the keypad (for example, the consumer keypad 210) may perform the steps 720, 725, 730 and 735 as backend processes.

In step 740, the keypad passes the resulting Track II data to the ECR/POS.

In step 745, the ECR/POS communicates the Track II data to the account server (for example, the account server 240). The line 748 indicates that the ECR/POS may perform the step 745.

The Track II data according to option 1 may be in the following format:
<Phone Number>=<fixed expiration date><PIN><discretionary Data>
where
<Phone Number> is the consumer's account number,
<fixed expiration date> is a fixed expiration date,
<PIN> is the consumer's PIN, and
<discretionary Data> is various additional data.

In step 755, keypad constructs Track II data using the consumer's account number (which may be the consumer's phone number) and PIN.

In step 760, the keypad adds a fixed expiration date to the Track II data.

In step 765, the keypad adds a specific issuer identification number (IIN) to the Track II data. The IIN may be added as a prefix, as a suffix, or otherwise. The IIN may identify a specific issuer, for example, MobiBucks. The line 738 indicates that the keypad (for example, the consumer keypad 210) may perform the steps 720, 725, 755, 760 and 765 as backend processes.

In step 770, keypad passes the resulting Track II data to the ECR/POS.

In step 775, the ECR/POS communicates the Track II data to the account server (for example, the account server 240). The line 748 indicates that the ECR/POS may perform the step 775.

The Track II data according to option 2 may be in the following format:
<IIN><Phone Number>=<fixed expiration date><PIN><discretionary Data>
where
<IIN> is the issuer identification number,
<Phone Number> is the consumer's account number,
<fixed expiration date> is a fixed expiration date,
<PIN> is the consumer's PIN, and
<discretionary Data> is various additional data.

### Asynchronous Operation

As mentioned previously, the steps of the method 300 need not be performed sequentially. A feature of certain embodiments of the present invention is that the method 300 may be performed asynchronously by the various participants. For example, the consumer may be entering the consumer's information (step 310) at the same time (or after) the merchant is entering the merchant's information (step 340). In such a case, the account server 240 relates the two entries because it knows the locations of the consumer keypad 210 and the merchant keypad 220.

For embodiments that print receipts, the receipt printing may also be performed asynchronously. (This may also be referred to as piecemeal printing.) Some information may be printed when data is first entered into the consumer keypad 210 (step 310) or the merchant keypad 220 (step 340), for example, the name and address of the merchant, the time and date, an identifier for the consumer keypad 210 or the merchant keypad 220, etc. Some other information may be printed when the account has been verified (step 330), such as the account number (or a portion thereof). Some other information may be printed when the merchant information has been received (step 340), such as the transaction amount. Some other information may be printed when the consumer's account has been updated (step 350), such as the new account balance. Some other information may be printed when the account server 240 sends the verification information (step 360), such as a message that the consumer may shortly expect to receive the verification information.

### Tip Entry Option

As a specific example of another asynchronous data entry option, the consumer may also enter a tip (gratuity) when entering the consumer's account number and PIN (step 310). The tip may be entered as an exact amount or as a percentage of the purchase price of the transaction. If the tip information is entered before the merchant transmits the purchase price (step 340), the account server 240 may transmit the tip information to the merchant keypad 220, and the merchant keypad 220 may confirm the tip amount (in the case of an exact amount) or convert the tip percentage to an amount that is transmitted to the account server 240 with the purchase price. If the tip information is entered after the merchant has transmitted the purchase amount, the account server 240 may compute the tip amount (in the case of a percentage tip) and communicate the tip amount to the merchant keypad 220.

### Top Up Process

The term "top up" refers to the consumer adding funds to the consumer's existing account with the account server 240. The procedure is very similar to the basic method 300. One difference is that in step 340, the merchant indicates that the consumer is topping up the consumer's account and enters the amount that the consumer is funding the account into the merchant keypad 220. The consumer may top up the consumer's account using various funding sources (see step 630).

Another difference is that in step 350, the account server 240 indicates in the consumer's account a credit (from the merchant), and in the merchant's account a debit (to the consumer).

The top up process may also be performed as part of a transaction. For example, if the pre approval process indicates that the consumer's account has a lower balance than the current transaction, the consumer may top up the consumer's account in the middle of, or as part of, the transaction.

### Sub-Accounts

A consumer is not limited to a single account on the account server 240. The consumer may use the consumer's account number to access a variety of sub accounts. Each sub account may be associated with a particular merchant, with a particular merchant location, with a particular funding source, or with a particular hierarchy of funding sources. For example, the consumer may have a sub account A1 that is used when transacting with a specific merchant M1, and a sub account A2 that is used when transacting with a specific merchant M2. The consumer may have a sub account A3 that was funded with cash and a sub account A4 that was funded with a credit card. The consumer may have a sub account A5 that was funded with both cash and a gift card, in which the gift card portion is to be used up prior to the cash portion. The consumer may have a sub account A6 that was funded at location L1 of a merchant M3 and a sub account A7 that was funded at a location L2 of the merchant M3.

One feature of having sub accounts is that a consumer may use the account server 240 to serve as a repository for gift cards from various merchants. Such a repository increases the convenience for the consumer because the consumer need not remember to possess the gift card when visiting the merchant or to use the gift card when making a purchase from the merchant.

Additionally, a sub account need not be associated with a funding source. Instead, sub accounts may be associated with other types of data. One example of such other data is identification cards, such as a library card, a health club ID, etc. The verification requirements for these sub accounts may be lower than for sub accounts that are associated with funding sources.

### Communication Options

One way that the account server 240 communicates confirmation and verification information to the consumer is via short message service (SMS) messaging to the consumer's mobile telephone. However, such information may also be communicated in other ways, including voice telephone communication, email, letter, etc.

### Access By Others

In general, a consumer creates and tops off the consumer's own account with the account server 240. However, another entity may also create an account for a consumer, in which case confirmation may be sent to both the consumer and the account creator. For example, one person may create and fund an account for another person as a gift. As another example, a merchant may create and fund an account for a consumer as a promotion to introduce the consumer to the payment system 200 or to the merchant. The recipient could perform the account verification as described above to enable other features.

Similarly, if a consumer already has an account, another entity may top off the consumer's account or add funds to a sub-account as a gift or promotion.

As a specific example, a merchant could purchase a list of mobile telephone numbers and send out promotional accounts via SMS messages.

As another specific example, a person could send money to another person's mobile telephone. To do so, the person may use a keypad at a merchant location even though the transaction is unrelated to the merchant. In such an embodiment, the payment system provides guarantees that the transfer has occurred as well as security of the transaction process.

### Transmission Data Security

According to one embodiment, the account data may be communicated to and from the account server 240 in ISO 8583 format, where the account number and PIN are part of the message. Three methods for secure transmission of the information may be used. First, the account number may appear as is within the ISO 8583 message. Such formatting may be appropriate when the connection over the network 230 is otherwise encrypted, so that the entire ISO 8583 message is encrypted. Second, the account number may be "tumbled" prior to insertion in the ISO 8583 message and de "tumbled" upon receipt of the ISO 8583 message. (Tumbling refers to encryption using a long string of numbers known to both parties.) Third, the account number may be encrypted by a method other than tumbling, or both tumbled and encrypted, prior to insertion in the ISO 8583 message.

### Data Entry Options

The term "keypad" has been broadly used to describe any device used for data entry or other interactions with the payment system 100. At its most basic, the keypad (for example, the keypad 210) may include numeric keys for entering the account number and PIN, an ENTER key, and a display. The keypad may also include a printer for printing receipts, transaction confirmations, etc.

Another option for the keypad is to use another type of data entry hardware. Such other data entry hardware may include a radio frequency identification (RFID) reader, an antenna or other wireless interface, a smart card reader, a magnetic strip reader or other card swipe system, a card insertion system, a touch screen, etc. The consumer possesses the corresponding components, such as a RFID tag, a smart card, or a magnetic card, etc., which the consumer uses instead of typing in the consumer's account number manually. The corresponding components may be integrated as part of the consumer's mobile telephone, personal digital assistant (PDA), keyfob, or as separate devices.

For example, the keypad may have a radio frequency identification (RFID) reader that reads a RFID tag implemented as a component of the consumer's mobile telephone. The keypad reads the RFID tag to get the user's account number instead of the user manually entering the account number. The proximity between the consumer, the consumer's mobile telephone, and the keypad helps to reduce fraud.

### Additional Options

Besides the account creation, basic transaction and top up procedures, the consumer may access the consumer's account for other purposes. Such other purposes may include updating the consumer's account information, performing a balance inquiry, etc. Similarly, the merchant may access the merchant's account to perform a balance inquiry, etc.

Besides the systems described above for accessing the account server, access may also be made in other ways. The consumer may access the account server via a website, via text or SMS messaging, via a dedicated application on the consumer's mobile telephone (either built in or downloaded, for example, a Java application), via a login and menu system on the telephone, via customer support on the telephone, via electronic mail, etc.

Besides transactions between a consumer and a merchant, the account server 240 may also be used for other types of transactions. One example is to transfer money from one consumer's account to another consumer's account. Another example is to convert funds in a consumer's account from one currency to another.

Embodiments of the present invention that use the consumer's telephone number as the account number have a number of advantages. For the consumer, the consumer need not carry cash. The consumer need not carry other funding sources, such as credit cards, debit cards or gift cards. The consumer need not worry about forgetting to bring a gift card to a particular merchant. The consumer can easily remember the consumer's account number. The consumer can easily access a variety of sub accounts with a single account number. The consumer may quickly receive confirmation of a transaction on the consumer's mobile telephone in proximity to the consumer and to the merchant, reducing fraud.

For the merchant, the consumer may spend more than with cash. The transaction charges to the merchant may be lower than with credit cards or debit cards. The risk of theft is reduced as compared to cash.

For the service provider, directly using the consumer's account number (that is, the mobile telephone number) for verification of a transaction eliminates the need to perform an intermediate database lookup. In addition, it gives the service provider a level of authentication to immediately incorporate a new consumer into the system by directly sending confirmation of the new account creation to a device in close proximity to the consumer and the merchant. The account can be created and the creation confirmed in a single step.

Embodiments of the present invention that implement pre approval have a number of advantages. The consumer need not wait for the merchant to receive a confirmation that the consumer's account information is correct or that the consumer's account balance is sufficient. The consumer is able to detect and resolve problems with the consumer's account prior to interaction with the merchant regarding the specific details of the transaction. This saves time (on the part of the merchant) and embarrassment (on the part of the consumer).

Embodiments of the present invention that use keypads at a merchant location have a number of advantages. One advantage is that one person may transfer money to another person using the merchant's location as a guarantee of security for the transfer.

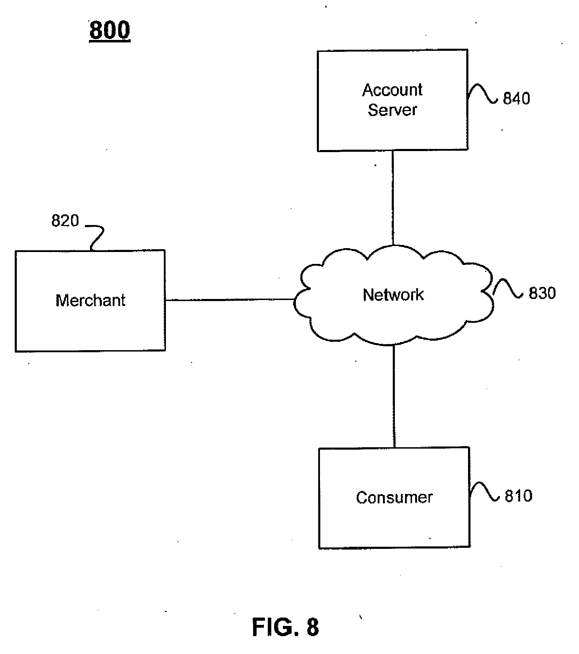

FIG. 8 is a block diagram of a web merchant interface system 800 according to an embodiment of the present invention. The web merchant interface system 800 includes a consumer system 810, a merchant system 820, and an account server 840. A network 830 connects the consumer system 810, the merchant system 820 and the account server 840.

The consumer system 810 allows a consumer or other entity to interact with the merchant system 820 or the account server 840 via the network 830. The consumer system 810 may be implemented as a personal computer that executes a computer program for web browsing. The consumer system 810 may be a mobile communications device that executes a program (such as a JAVA program) for interacting with the merchant system 820 or the account server 840. The consumer system may also be a mobile communications device that interacts with the account server 840 directly, for example, by way of a menu system via a telephone link.

The merchant system 820 allows a merchant or other entity to interact with the consumer system 810 or the account server 840 via the network 830. The merchant system 820 may be implemented as a web server or other type of electronic commerce website. The consumer may interact with the merchant system 820 (via the consumer system 810) to make a purchase or otherwise perform electronic commerce transactions.

The network 830 may be a computer network or other type of communications network, such as the internet.

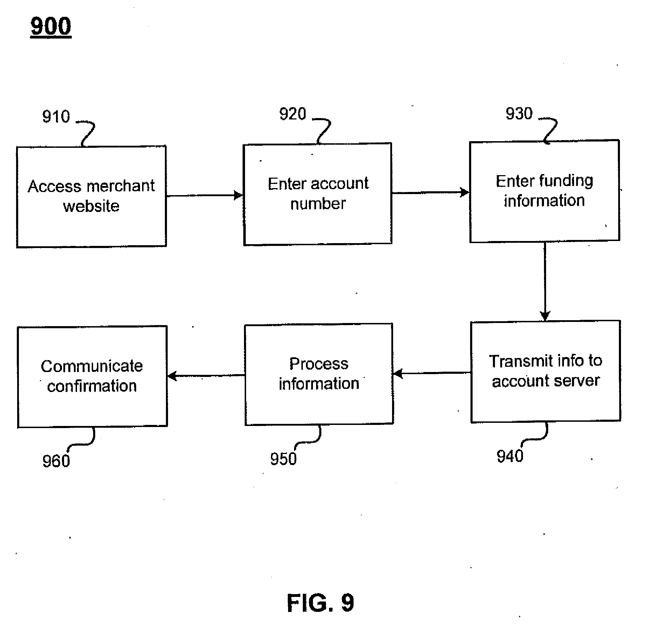

The account server 840 stores account information for the merchant and the consumer. The account server may be implemented as a database program that runs on a computer system. As an example, when the consumer makes a purchase from the merchant, the account server 840 debits the consumer's account and credits the merchant's account. The account server 840 may be similar to the account server 140, the account server 240, the account server 440, or the account server 540 and have similar functionality. For conciseness, such similarities are not repeated. However, the web merchant interface system 800 is useful to illustrate a gift certificate purchase process that is more fully detailed with reference to FIG. 9.

FIG. 9 is a flowchart of a gift certificate purchase process 900 according to an embodiment of the present invention. The gift certificate purchase process 900 may be performed by the web merchant interface system 800.

In step 910, the consumer accesses the merchant's website. The consumer may use the consumer system 810 to access the merchant system 820 via the network 830. For example, the consumer may use a web browsing program to access the merchant's electronic commerce site via the internet. The consumer may perform various electronic commerce functions such as purchasing goods and services, browsing goods and services, etc. For the purposes of illustrating the gift certificate purchase process 900, it is assumed that the consumer is purchasing a gift certificate according to an embodiment of the present invention.

In step 920, the consumer enters an account number to which the consumer wants to give a gift certificate. For ease of description, the entity to whom the consumer wants to give the gift certificate will be referred to as the friend, and this account number will be referred to as the friend's account number. As discussed above with reference to other embodiments of the present invention, the friend's account number may be the friend's mobile telephone number. As an example, the merchant system 820 may serve a web page to the consumer system 810, into which the consumer enters the friend's account number.

In step 930, the consumer enters funding information that indicates the funds the consumer wishes to be placed in the friend's account. As an example, the consumer enters funding information into the web page served by the merchant system 820. Various funding sources may be used, including a credit card, a debit card, a gift card, a gift certificate, electronic cash, a PayPal account, a Google Checkout account, the consumer's account on the account server 840, etc. The merchant system 820 need not verify the friend's account number or the funding information.

In step 940, the merchant transmits the friend's account number and the funding information to the account server 840. The merchant system 820 may transmit this information via the network 830.

In step 950, the account server 840 processes the friend's account number and the funding information. If the friend does not yet have an account, then the account server 840 creates an account for the friend. The account server 840 updates the friend's account with a credit for the funded amount. The account server 840 executes processing so that the consumer's funding source receives a debit. For example, if the consumer is funding with a credit card as the source, the account server 840 may interact with a credit card service provider. As another example, if the consumer is funding with the consumer's account on the account server 840 as the source, the account server 840 may update the consumer's account.

As a further option, the account server 840 may fund a sub account of the friend's account that is related to the merchant. The consumer may indicate that the gift is to be applied to the sub account, or the merchant system 820 may indicate that the gift is to be applied to the sub account. The friend may also indicate that the gift is to be applied to the sub account, for example, by setting various gift receipt options in the friend's account on the account server 840. For example, if the consumer is purchasing a gift certificate for the friend from the XYZ.com website, the friend's sub account associated with XYZ.com may be funded.

In step 960, the account server 840 sends confirmation that the friend's account has been funded. The confirmation may include details of the transaction, such as the date, time, amount, location, etc. The confirmation may be transmitted to the merchant system 820, for example, so that it knows that the account server 840 has acted on the merchant system's transmission in step 940. The merchant system 820 may also use the confirmation to update information it stores regarding the consumer or the friend, for example, as part of its personal data collection procedures. The merchant system 820 may transmit its own confirmation to the consumer system 810.

The confirmation may be transmitted to the friend. According to an embodiment of the present invention, the friend's account number is the friend's mobile telephone number. In such a case, the account server 840 directly uses the friend's account number to send the confirmation to the friend's mobile telephone number. Such direct access may be contrasted with a system in which the account number differs from the telephone number, which may involve an intermediate database lookup step to get the telephone number for a given account. The confirmation may be in the form of an SMS message.

The confirmation may be transmitted to the consumer system 810. For example, if the consumer has funded the gift with a credit card, the credit card company may provide the consumer's email address to the account server 840. The merchant system 820 may have provided the consumer's email address to the account server 840 along with the information transmitted in step 940.

The confirmation may be transmitted to the consumer's mobile telephone. For example, if the consumer has funded the gift with a credit card, the credit card company may provide the consumer's telephone number to the account server 840. The merchant system 820 may have provided the consumer's telephone number to the account server 840 along with the information transmitted in step 940. The confirmation may be in the form of an SMS message.

If the consumer funded the account with the consumer's account on the account server 840, the account server 840 may send a separate confirmation that indicates a debit on the consumer's account. Such confirmation may be similar to the confirmation sent as part of the normal process of making purchases using the consumer's account, discussed above with reference to step 360.

As an additional security feature of the gift certificate purchase process 900, interaction between the friend and the consumer may be performed to validate the gift. The confirmation to the friend (see step 960) may include a validation code. The friend contacts the consumer and provides the validation code. Such contact may be via voice, text message, etc. The consumer then knows that the gift was given to the friend as intended. The consumer may then access the account server 840 (for example, via the consumer system 810) and provide the validation code. The account server 840 then validates the gift for use by the friend.

Different aspects of the invention include the following aspects A1-A10:
A1. A computer-implemented method of performing a commercial transaction between a first entity and a second entity, comprising the steps of:
   receiving, by an account server from the first entity, an account number and a verification code, wherein the account number and the verification code are selected by the first entity, and wherein the account number relates to a first account maintained by the account server;
   verifying, by the account server, the account number and the verification code;
   receiving, by the account server from the second entity, information regarding a specific transaction; and
   adjusting, by the account server, the first account and a second account according to the specific transaction, wherein the second account is related to the second entity.
A2. The method A1, wherein the account number corresponds to a mobile telephone number of a mobile telephone of the first entity.
A3. The method A1, further comprising:
   sending, by the account server, a verification of the specific transaction to a personal communications device of the first entity, wherein the account number directly identifies the personal communications device.
A4. The method A1, wherein the first account is one of a plurality of accounts related to the account number and maintained by the account server.
A5. A computer-implemented method of transferring funds from a first entity to a second entity, comprising the steps of:
   receiving, by an account server from the first entity, a first account number and a verification code, wherein the first account number and the verification code are selected by the first entity, and wherein the first account number relates to a first account maintained by the account server;
   verifying, by the account server, the first account number and the verification code;
   receiving, by the account server from the first entity, a second account number and a transaction amount, wherein the second account number is selected by the second entity and relates to a second account maintained by the account server; and
   adjusting, by the account server, the first account and the second account according to the transaction amount.
A6. A method of funding a gift certificate, comprising the steps of:
   receiving information indicating an account number and a funding source, wherein the account number is selected by a first entity, and wherein the account number corresponds to an account related to the first entity;
   funding the account according to the funding source; and
   transmitting a verification of completion of the step of funding to a personal communications device of the first entity, wherein the account number directly identifies the personal communications device.
A7. The method A6, further comprising:
   receiving a merchant identifier, wherein the step of funding the account comprises funding a sub account of the account that is related to the merchant identifier.
A8. An apparatus including an account server for performing a commercial transaction between a first entity and a second entity, said account server executing a computer program comprising the steps of:
   receiving, from the first entity, an account number and a verification code, wherein the account number and the verification code are selected by the first entity, and wherein the account number relates to a first account maintained by the account server;
   verifying, the account number and the verification code;
   receiving, from the second entity, information regarding a specific transaction; and
   adjusting, the first account and a second account according to the specific transaction, wherein the second account is related to the second entity.
A9. A system for performing a commercial transaction between a first entity and a second entity, comprising:
   an account server; and
   an input device, coupled to said account server via a network,
   wherein said account server executes a first computer program comprising the steps of:
      receiving, from the input device, an account number and a verification code, wherein the account number and the verification code are selected by the first entity, and wherein the account number relates to a first account maintained by the account server;
      verifying the account number and the verification code;
      receiving information regarding a specific transaction; and
      adjusting the first account and a second account according to the specific transaction, wherein the second account is related to the second entity; and
      wherein said input device executes a second computer program comprising the steps of:
         receiving, from said first entity, said account number and said verification code; and
         transmitting said account number and said verification code to said account server via said network.
A10. The system A9, wherein said input device comprises a first input device, further comprising:
   a second input device, coupled to said account server via said network, wherein said second input device executes a third computer program comprising the steps of:
      receiving, from said second entity, said information regarding said specific transaction; and
      transmitting said information regarding said specific transaction to said account server via said network.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the spirit and scope of the invention as defined by the claims.

## Claims

1. A computer-implemented method for creating an account for a consumer and performing a transaction between the consumer and a merchant, comprising the steps of:
receiving by an account server from the consumer (i) a telephone number of a mobile phone of the consumer and (ii) a personal identification number selected by the consumer;
checking, by the account server, if the telephone number of the mobile phone of the consumer is available as an account number for the account of the consumer;
creating the account using the account server if the telephone number of the mobile phone of the consumer is available to be used as the account number for the account, the account number of the account being the telephone number of the mobile phone of the consumer;
funding the account to effect payment for the transaction;
after creating and funding the account, the account server transmitting a confirmation message directly using the account number to the telephone number of the mobile phone of the consumer; and
after transmitting the confirmation message, the account server receiving validation information via SMS messaging from the consumer.

2. The method of claim 1, further comprising:
verifying that the transmitted personal identification number is correct;
wherein the telephone number of the mobile phone of the consumer and the transmitted personal identification number are received via a communication sent from a keypad of a point of sale terminal operated by the merchant.

3. The method of claim 1, wherein:
the telephone number of the mobile phone of the consumer and the transmitted personal identification number are received via a communication encapsulated in an ISO 8583 format; and
the transmitting of the confirmation message involves an SMS message sent to the telephone number of the mobile phone of the consumer.

4. The method of claim 1, wherein the telephone number of the mobile phone of the consumer is received in the receiving step via a keypad of a point of sale terminal operated by the merchant.

5. The method of claim 1, wherein the confirmation message includes details of the transaction that include the location of the transaction.

6. The method of claim 1, wherein the validation information contains information identifying the consumer beyond the telephone number of the mobile phone of the consumer.

7. The method of claim 1, further comprising:
receiving, by the account server, via a communication sent from a merchant keypad of a point of sale terminal operated by the merchant, a purchase price for the transaction;
wherein the telephone number of the mobile phone of the consumer and the personal identification number are received in the receiving step via a consumer keypad of a point of sale terminal operated by the merchant.

8. The method of claim 7, wherein:
the transaction is approved by the merchant upon the merchant entering the purchase price if the balance of funds of the account of the consumer is more than the purchase price.

9. The method of claim 1, further comprising:
transmitting a confirmation message from the account server to a keypad of the consumer and/or to a keypad of the merchant.

10. The method of claim 1, wherein:
the telephone number and the personal identification number is received by the account server from a point of sale terminal.

11. The method of claim 1, wherein:
the receiving by an account server is from a keypad of a point of sale terminal operated by the merchant.

12. The method of claim 1, further comprising:
requesting additional identification information from the consumer to perform a validation procedure;
receiving additional identification information from the consumer to perform a validation procedure, the additional identification information being in addition to the telephone number of the mobile phone of the consumer; and
validating the additional identification information received from the consumer.

13. The method of claim 12, further comprising:
transmitting a request for the additional identification information to the consumer;
wherein the additional identification information is received from the consumer via an SMS message sent from the telephone number of the mobile phone of the consumer.

14. The method of claim 1, further comprising:
receiving by the account server, via the merchant keypad of the point of sale terminal, a funding source information message containing funding information, the funding information corresponding to a funding source of the consumer; and
the account server updating the account with the funding information.

15. The method of claim 13, wherein:
the additional identification information is a name of the consumer; and
the validating of the additional identification information involves determining if the name of the consumer matches the telephone number of the mobile phone of the consumer.

16. The method of claim 1, further comprising:
the account server converting funds associated with the account from a first currency to a second currency.

17. A method of claim 1, further comprising:
transmitting a confirmation message to the telephone number of the mobile telephone of the consumer to inform the consumer that the account was funded for the consumer;
receiving at the account server, from the consumer, via a keypad of a point of sale terminal, a first funding source information message containing funding information regarding a first funding source; and
the account server updating the account with the funding source information;
wherein the telephone number of the mobile phone of is the account number of the account.

18. The method of claim 17, wherein the confirmation message is sent via an SMS message.

19. The method of claim 1, further comprising:
creating a subaccount, the subaccount being accessed by the account number of the consumer;
wherein the subaccount is associated with (i) a particular merchant, (ii) a particular merchant location, (iii) a particular funding source, or (iv) a particular hierarchy of funding sources.

20. The method of claim 19, wherein the funding source is a gift card for the particular merchant.

21. The method of claim 1, further comprising:
after funding the account, transmitting a confirmation message via direct use of the account number to the telephone number of the mobile phone of the consumer to inform the consumer that the account was funded for the consumer;
receiving, by the account server, via a keypad of a point of sale terminal operated by the merchant, a purchase price for the transaction from the merchant; and
topping up the account from a funding source using the account server.

22. The method of claim 21, further comprising:
transmitting, via direct use of the account number to the telephone number of the mobile phone of with the consumer, a transaction verification information message to the telephone number of the mobile phone of the consumer.

23. The method of claim 21, wherein:
the receiving of the telephone number of the mobile phone of the consumer from the consumer is conducted via a consumer keypad of the point of sale terminal operated by the consumer; and
the receiving of the purchase price from the merchant is conducted via the merchant keypad of the point of sale terminal operated by the merchant.

24. The method of claim 21, further comprising:
sending a preapproval message to the point of sale terminal if the account exists.
